(19) Europäisches Patentamt

European Patent Office

Office européen des brevets

(11) **EP 1 536 273 A1**

(12) **EUROPEAN PATENT APPLICATION**

(43) Date of publication:
01.06.2005 Bulletin 2005/22

(51) Int Cl.$^7$: **G02F 1/21**, G02F 1/061

(21) Application number: 03405840.4

(22) Date of filing: 25.11.2003

(84) Designated Contracting States:
**AT BE BG CH CY CZ DE DK EE ES FI FR GB GR HU IE IT LI LU MC NL PT RO SE SI SK TR**
Designated Extension States:
**AL LT LV MK**

(71) Applicant: **C.S.E.M. CENTRE SUISSE D'ELECTRONIQUE ET DE MICROTECHNIQUE SA**
**2007 Neuchâtel (CH)**

(72) Inventor: **Gubler, Ulrich**
**6006 Luzern (CH)**

(74) Representative:
**Patentanwälte Feldmann & Partner AG**
**Postfach**
**Europastrasse 17**
**8152 Glattbrugg (CH)**

(54) **Polarization-independent electro-optic modulator**

(57)     A device (1) and method for modulating the phase or the amplitude of a light beam (91) is presented. Off-diagonal tensor elements of the electro-optic response of an active material (5) are used. An electric field is applied along the propagation direction (z) of the light, and a refractive-index change in the active material (5) occurs in the perpendicular direction (x,y). A cavity of the Fabry-Perot type limited by two mirrors (41, 42) is employed to increase the optical interaction length and to transform phase into amplitude change in the case of amplitude modulation. The modulation is independent of the light polarization. The device (1) is manufacturable simply and at low costs, and provides large apertures. Modulation frequencies in the GHz range are possible.

Fig. 1

**Description**

Field of the invention

This invention relates to an electro-optic device and a method for electro-optically influencing the amplitude and/or the phase of light, according to the preambles of the independent claims. The optical response depends on an electric input signal. The invention can be useful in all applications in which a signal has to be externally modulated onto a light beam. Such applications include telecommunication, data processing, sensing and ranging, beam steering and beam shaping, etc.

Background of the invention

Modulation of light with a signal, or making light carry information, is of importance in various fields. In principle, there are two different approaches to modulate the light:

- In a first approach, a light source is switched on and off. The light source is typically a semiconductor laser diode, where the laser drive current is varied, leading to an amplitude modulation of the emitted light. This method is very simple but shows problems at high frequencies in the GHz range, e.g., wavelength chirp, phase noise, etc. Furthermore, changing the laser drive current enables only amplitude modulation and not phase or polarization-state modulation.
- In a second approach, an external modulator is applied to a continuous light beam. The continuous light beam is typically emitted by a continuous-wave laser, e.g., a semiconductor laser diode, a solid-state laser, a gas laser, etc. Depending on the exact mechanism of the modulator, the modulation can be either an amplitude, a phase (frequency) or a polarization-state modulation.

Both approaches work for classical light sources and lasers (or other narrow linewidth emitters)as well.
The present invention focusses on the second approach, i.e., on the external modulators. Various embodiments of such external modulators for continuous lasers are known and described below:

**(a) Mechanical modulation**
The most obvious solution to modulate a beam is to use a mechanical shutter blocking the light beam. If a continuous modulation is desired instead of the digital shuttering, a plate with spatially graded attenuation (or phase lag for phase modulation) can be moved back and forth in the beam path. This scheme is polarization independent, but also limited in speed.

**(b) Modulation based on electro-absorption**
If charge carriers are injected into the valence or conduction band of a semiconductor (such as Si, GaAs, InGaAs, or InP), additional absorption bands can occur. This effect can be exploited for an amplitude modulator if the injected current is changed. This scheme can be polarization dependent if the created absorption is not isotropic.

**(c) Modulation by liquid-crystal cells**
Liquid crystals are very frequently used for switches or modulators if the speed is not very high (switching times in the millisecond range). An electric field applied to a liquid crystal cell changes the orientation of the molecules, leading to a change of the optical phase or also the polarization. Depending on the exact design and the desired type of modulation, polarizers, waveplates, and other elements have to be added to the device. A liquid-crystal electro-optic modulator in a Fabry-Perot interferometer is disclosed in U.S. Patent No. 4,779,959. Generally, the liquid-crystal devices are very polarization sensitive. For most applications, one can devise a polarization-independent layout, but this usually results in a more complicated design with more components.

**(d) Modulation by changing refractive index**
The most common method for external laser modulation is to use a dielectric crystal or a semiconductor with an electro-optic effect to change the refractive index of the material and consequently also the phase of the optical beam. The electric field is either applied transversally or longitudinally to the crystal. In the transversal case, the change of refractive index parallel to the electric field is exploited; the modulation then depends on the light polarization. In the longitudinal case, the refractive-index change perpendicular to the applied electric field is exploited; the operation can be independent of polarization if the appropriate kind of crystal is chosen. If the amplitude should be modulated rather than the phase, the beam exiting from the modulator is overlapped with a reference beam, e.g., in a Mach-Zehnder interferometer. The interference of the two beams creates the amplitude modulation in function of the introduced phase modulation. Another method for changing a phase modulation into an amplitude modulation is to use a cavity, e.g., a Fabry-Perot resonator. The induced refractive-index change tunes the transmission of the cavity on and off at a specific wavelength. This approach has been described in the transversal case, e.g., in EP-0'140'578 A1 or in U.S. Patent No. 4,198,115. The publication FR-2'758'631 A1 discloses a Fabry-Perot resonator with an active medium inside the cavity, wherein the refractive index of the active medium is changed via the Stark effect by applying a longitudinal electric field across the active medium. However, this setup requires a multilayer semiconductor quantum-well structure and is thus complicated and costly. The semiconductor structure cannot be fabricated on a large area within the required tolerance limits, so that the aperture of the device is small. Moreover, the device can be designed and used only for a certain, relatively narrow light-wavelength band.

All above approaches can be designed either in a free-space or an integrated layout. In free-space components, the incident and outgoing light is freely propagating through space (e.g., in air or vacuum). In an integrated-optical layout, the light is guided laterally by a structure such as a dielectric or hollow waveguide.

Summary of the invention

It is an object of the invention to provide an electro-optic device and a method for electro-optically influencing the phase or the amplitude of a light beam, wherein the disadvantages of the prior art are avoided. In particular, the modulation shall be independent of the light polarization. The device shall be manufacturable simply and at low costs. It shall provide large apertures with typical diameters of up to a few centimeters. Modulation frequencies in the GHz range shall be possible.

These and other objects are solved by the device and the method as defined in the independent claims. Advantageous embodiments are defined in the dependent claims.

The present invention shows a new way to modulate phase or amplitude of a light beam independent of the light polarization using off-diagonal tensor elements of the electro-optic response of an active material. A cavity is employed to increase the optical interaction length and to transform phase into amplitude change in the case of amplitude modulation.

Concerning the active material, an off-diagonal tensor element of the electro-optic response is necessary for the inventive concept. This means that if the electric field is applied along one direction ($x_3$ axis), a refractive index change occurs in the perpendicular direction ($x_1,x_2$ plane). Consequently, a longitudinal design of an electro-optic device can be employed with the electric-field applied along the propagation direction of the light ($x_3$ axis). Most interesting are materials with the same refractive-index change in the whole $x_1,x_2$ plane as for these materials the response is independent of the light polarization propagating along the $x_3$ axis.

Concerning the cavity, the electro-optic material is sandwiched between two flat or curved mirrors as, e.g., in a Fabry-Perot cavity, a focal or a confocal cavity. The mirrors can be metallic layers or stacks of dielectric or semiconductor layers.

Thus, the inventive electro-optic device for influencing the amplitude and/or the phase of light propagating essentially in a propagation direction comprises an optical cavity containing an electro-optic material, and at least two electrodes for applying an electric field oriented in said propagation direction across said electro-optic material. In a Cartesian coordinate system in which the $x_3$ axis is parallel to said propagation direction, the electro-optic coefficients of said electro-optic material fulfil the condition

$$r_{hk} = \begin{bmatrix} \dots & \dots & a \\ \dots & \dots & a \\ \dots & \dots & \dots \\ \dots & \dots & 0 \\ \dots & \dots & 0 \\ \dots & \dots & 0 \end{bmatrix}$$

for a linear electro-optic material, and, in case that a = 0, the additional condition

$$R_{hg} = \begin{bmatrix} \dots & \dots & b & \dots & \dots & \dots \\ \dots & \dots & b & \dots & \dots & \dots \\ \dots & \dots & \dots & \dots & \dots & \dots \\ \dots & \dots & 0 & \dots & \dots & \dots \\ \dots & \dots & 0 & \dots & \dots & \dots \\ \dots & \dots & 0 & \dots & \dots & \dots \end{bmatrix},$$

for a quadratic electro-optic material, wherein the symbol "..." stands for an arbitrary value.

Brief description of the drawings

Embodiments of the invention are described in greater detail hereinafter relative to the attached schematic drawings.

Figure 1        shows a schematic side view of the modulator according to the invention.
Figures 2-4     show the transmission of the modulator versus the light wavelength.
Figure 5        shows the principle of modulation according to the invention.
Figure 6        shows (a) the transmission and (b) the phase versus the light wavelength or the electric field for another embodiment of the modulator according to the invention.
Figure 7        shows the Cartesian coordinate system used for a general description of the active material suitable for the modulator according to the invention.

Description of preferred embodiments

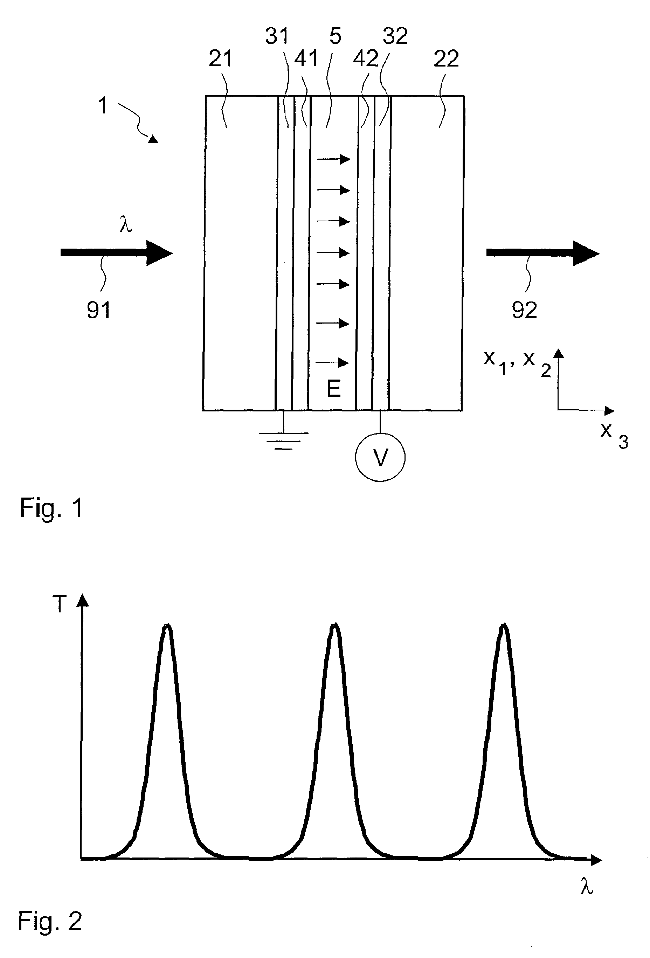

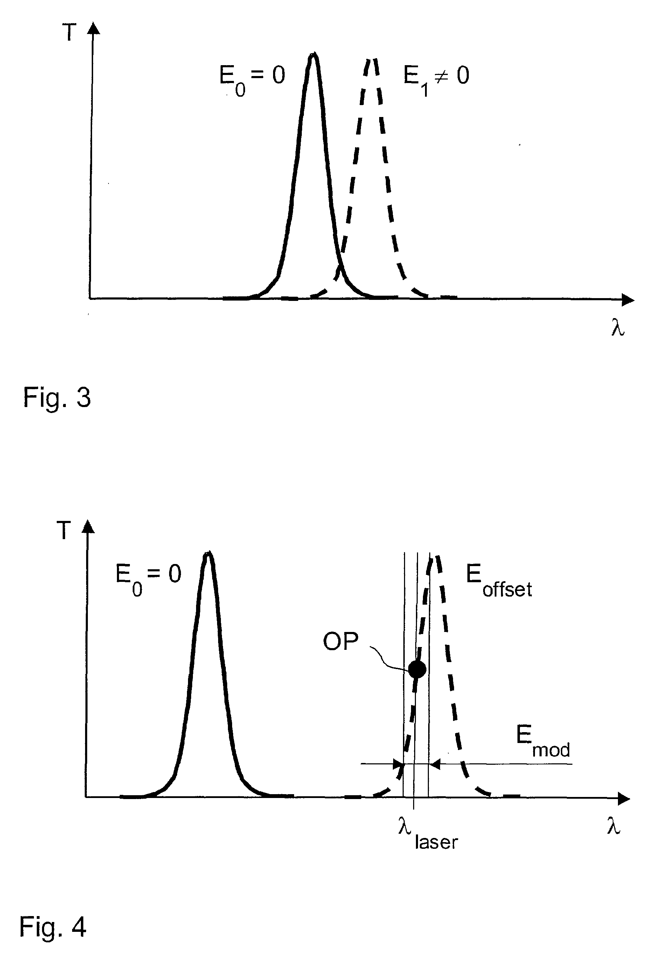

**Figure 1** schematically shows an embodiment of the modulator 1 according to the invention. An incident light beam 91 with a wavelength $\lambda$ impinges onto the modulator, is modulated in phase and/or in intensity, and exits as modulated light 92. In the Cartesian coordinate system $x_1,x_2,x_3$ used, the propagation direction of the light beam 91, 92 is $x_3$. The modulator 1 comprises a Fabry-Perot cavity with an active electro-optic material 5 sandwiched between two electrodes 31, 32 for applying an electric field E in $x_3$ direction to the active material 5. The electric field E is applied by applying a voltage V to the electrodes 31, 32, the voltage V being an electric input signal. Two mirrors 41, 42 form the boundaries of the cavity. A mirror 41, 42 can be realized as a metallic layer or a stack of dielectric or semiconductor layers. In the former case, the metallic mirror can be directly used as one of the electrodes for applying an electric field; in case of a dielectric or semiconductor mirror, an additional electrode 31, 32 is provided. The various layers 31, 32, 41, 42 are preferably located on two substrates 21, 22 which must be transparent for the wavelength of the light 91 to be modulated.
A section of the transmission spectrum $T(\lambda)$ is shown in **Figure 2**. The Lorentz-type peaks of the of transmission curve $T(\lambda)$ are periodically repeated on the wavelength axis $\lambda$.
The modulation is achieved by changing the refractive index of the active material 5 by the electro-optic effect. When the refractive index changes due to an electric field $E_1 \neq 0$ applied to the electro-optic active material 5, the transmission curve $T(\lambda)$ of the cavity is spectrally shifted, as indicated in **Figure 3**. If a laser beam 91 at a certain constant wavelength within the transmission band of the cavity impinges onto the cavity, a change of the transmission amplitude results. Consequently, an amplitude modulation in function of the applied electric field E is effected. Because the change of refractive index is uniform in the $x_1,x_2$ plane of the cavity, the modulation does not depend on the polarization of the light 91.
The cavity may be designed directly for a specific laser wavelength $\lambda_{laser}$. Alternatively, as shown in **Figure 4,** an offset electric field $E_{offset}$ is used to shift the transmission curve $T(\lambda)$ to a desired operating point OP at the laser wavelength $\lambda_{laser}$, and then an additional, time-dependent modulating electric field $E_{mod}(t)$ is applied: $E(t) = E_{offset} + E_{mod}(t)$. The operating point OP is preferably chosen to be one of the points with the largest slope on the transmission curve $T(\lambda)$, which results in an optimum sensitivity dT/dE with respect to the modulation input signal $E_{mod}(t)$.
The offset field $E_{offset}$ can also be used to compensate drifts of the cavity caused for instance by thermal expansion or by refractive-index changes of the materials involved. Another possibility to compensate or minimize drifts of the modulator according to the invention is to use a spacer material outside the optical aperture of the cavity which has a thermal expansion coefficient appropriate for compensating the spectral shift of the cavity.

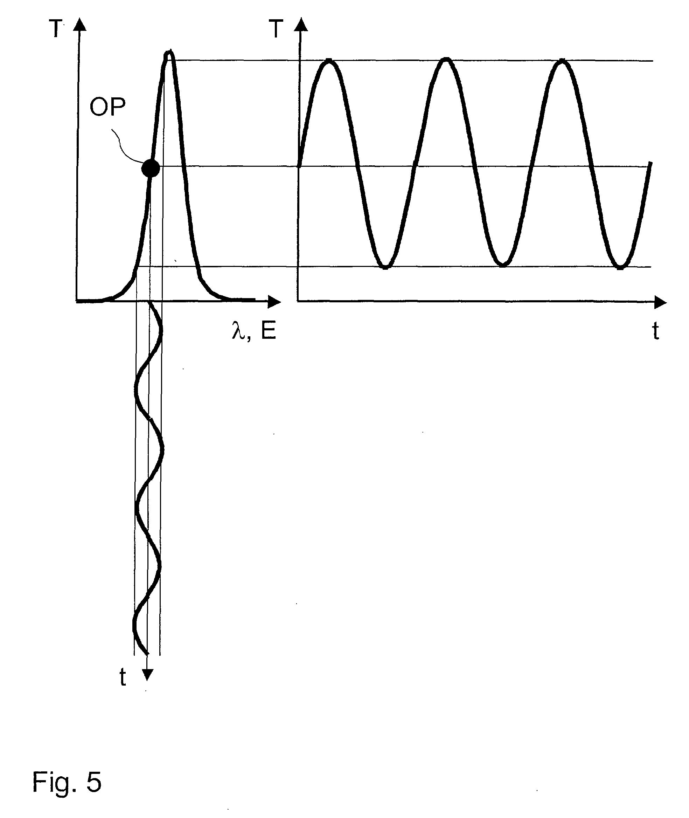

**Figure 5** graphically summarizes the modulation principle, illustrating how the electric input modulation signal E(t) - e.g., a sinusoidal signal - is transformed into an optical modulated output signal T(t).

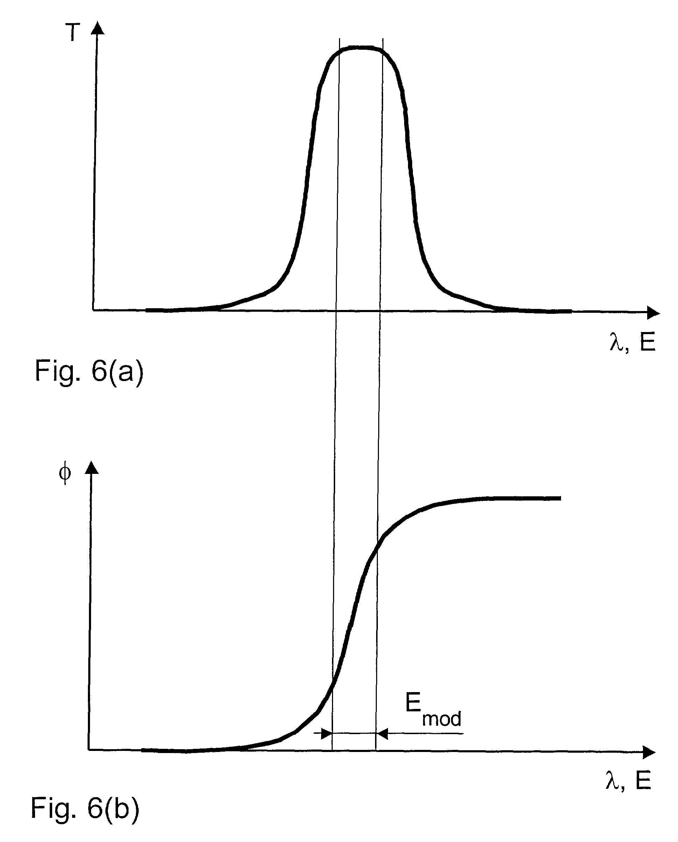

Another embodiment of the modulator 1 according to the invention is obtained if a cavity with a wide and flat pass band, as shown in **Figure 6(a)**, is used. Such a flat-pass-band cavity can be realized by a more complicated sequence of dielectric layers at the mirrors 41, 42. The transmission curve T(λ) is shifted by the electro-optic effect in the same way as described above. For small input signals $E_{mod}(t)$, there is no or only little amplitude change since the pass band is flat, whereas the phase response $\phi(\lambda)$, shown in **Figure 6(b)**, is substantial. Consequently, this embodiment acts as a phase modulator rather than an amplitude modulator. For larger modulation signals $E_{mod}(t)$, an additional amplitude modulation occurs again.

Another extension and application of the inventive concept is to arrange a plurality of modulators according to the invention to form a one- or two-dimensional array. With such an array, one can change the intensity and/or phase of a laser beam in a controlled way differently over its cross section. Such a scheme can be used, e.g., for beam steering and/or spatial and temporal beam-shaping of a laser.

The device according to the invention can also be used as a tunable spectral filter instead of a modulator. The transmission band is shifted with the electric field E, and consequently different wavelengths λ can pass, depending on the applied field E. In the intermediate range of the transmission curve T(λ), the device can also be utilized as a variable optical attenuator for a specific wavelength.

This invention is not limited to the preferred embodiments described above, to which variations and improvements may be made, without departing from the scope of protection of the present patent. The embodiments discussed above are three-dimensional optical devices. However, by applying the well-known analogy between classical and integrated optics, other embodiments can be designed in two dimensions, e.g., on an integrated-optical chip.

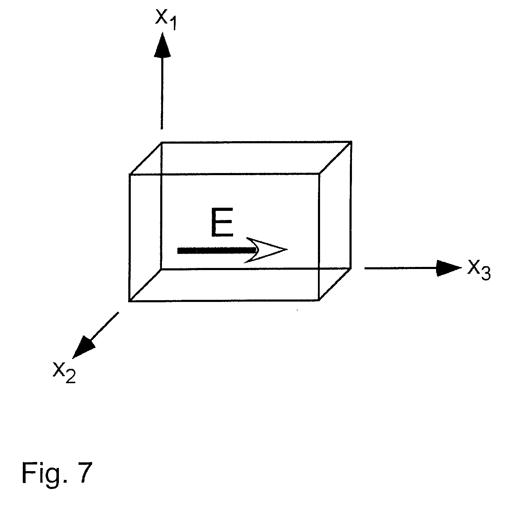

In the following, a general description of the active material for use in the present invention is given. The fundamental principles used for the description are presented, e.g., in "Handbook of Optics", Vol II, Ch. 13, Ed. M. Bass, 2nd ed., McGraw-Hill Inc., New York, 1995. The coordinate system used is sketched in **Figure 7.** The three axes of the Cartesian coordinate system are called $x_1$, $x_2$ and $x_3$ axes and will also be referred to as the 1, 2 and 3 axes, respectively. The electric field E is applied in the direction of the $x_3$ axis. The light 91, 92 is propagating parallel to the electric field E along the 3 direction. Consequently, the electric field of the light is experiencing the refractive index in the $x_1$ and/or the $x_2$ direction.

**(i) Requirement for the refractive index**

As the device 1 should not be birefringent, the refractive index in the plane of the $x_1$ and $x_2$ axis has to be the same for any direction in this plane. One usually says in such a case that the light 91, 92 is propagating along an optical axis of the active material 5. Mathematically, the refractive indices for the different directions can be described by the refractive-index ellipsoid (summation over common indices is assumed)

$$\left(\frac{1}{n^2}\right)_{ij} x_i x_j = 1 \tag{1}$$

In a typical embodiment of the present invention, the main axes of the refractive-index ellipsoid are parallel to the Cartesian coordinate axes, and the radii in $x_1$ and $x_2$ direction are the same. The index ellipsoid is a rotational ellipsoid with the extraordinary axis along the $x_3$ direction:

$$\frac{x_1^2 + x_2^2}{n_1^2} + \frac{x_3^2}{n_3^2} = 1 \qquad (n_1 = n_2) \tag{2}$$

**(ii) Requirement for the electro-optic tensor**

If an electric field $\underline{E}$ is applied to an active linear electro-optic material, the refractive-index ellipsoid changes depending on the electro-optic tensor r of the material:

$$\left\{\left(\frac{1}{n^2}\right)_{ij} + \Delta\left(\frac{1}{n^2}\right)_{ij}\right\} x_i x_j = 1 \qquad , \tag{3}$$

where

$$\Delta\left(\frac{1}{n^2}\right)_{ij} = r_{ijk} \cdot E_k \,.$$  (4)

As the refractive-index ellipsoid and its change is commutative in the index $i$ and $j$, Eq. (4) for the electro-optic tensor elements $r_{ijk}$ can be simplified by using one index $h$ for the different $(i,j)$-combinations: $(1,1) \Rightarrow h=1$, $(2,2) \Rightarrow h=2$, $(3,3) \Rightarrow h=3$, $(2,3) \Rightarrow h=4$, $(1,3) \Rightarrow h=5$, $(1,2) \Rightarrow h=6$.

Equation (4) can than be rewritten as

$$\begin{pmatrix} \Delta(1/n^2)_{11} \\ \Delta(1/n^2)_{22} \\ \Delta(1/n^2)_{33} \\ \Delta(1/n^2)_{23} \\ \Delta(1/n^2)_{13} \\ \Delta(1/n^2)_{12} \end{pmatrix} = \begin{bmatrix} r_{11} & r_{12} & r_{13} \\ r_{21} & r_{22} & r_{23} \\ r_{31} & r_{32} & r_{33} \\ r_{41} & r_{42} & r_{43} \\ r_{51} & r_{52} & r_{53} \\ r_{61} & r_{62} & r_{63} \end{bmatrix} \cdot \begin{pmatrix} E_1 \\ E_2 \\ E_3 \end{pmatrix} \,.$$  (5)

According to the invention, the electric field $\underline{E}$ is applied in the $x_3$ direction ($E_1 = E_2 = 0$), and therefore only the last column of the electro-optic coefficients $r_{hk}$ is of interest. In order to keep the device polarization insensitive, the change in refractive index in the $x_1, x_2$ plane has to be uniform, meaning that the coefficients $r_{13}$ and $r_{23}$ have to be the same and the off-axis coefficents $r_{43}$, $r_{53}$, and $r_{63}$ have to vanish. The necessary condition of a linear electro-optic material 5 for the present invention is

$$r_{hk} = \begin{bmatrix} \ldots & \ldots & a \\ \ldots & \ldots & a \\ \ldots & \ldots & \ldots \\ \ldots & \ldots & 0 \\ \ldots & \ldots & 0 \\ \ldots & \ldots & 0 \end{bmatrix}$$  (6)

with "..." meaning that this value is not important and can be arbitrary. a is a value characteristic for the respective electro-optic material 5; the two values denoted by "a" in Eq. (6) must be identical.

For a quadratic electro-optic material such as a liquid, equations analogous to Eq. (4)-(6) can be written.

$$\Delta\left(\frac{1}{n^2}\right)_{ij} = R_{ijkl} \cdot E_k E_l$$  (7)

The indices $(i,j)$ and $(k,l)$ can be combined to one index $h$ and $g$ applying the same rules as above, leading to

$$
\begin{pmatrix} \Delta(1/n^2)_{11} \\ \Delta(1/n^2)_{22} \\ \Delta(1/n^2)_{33} \\ \Delta(1/n^2)_{23} \\ \Delta(1/n^2)_{13} \\ \Delta(1/n^2)_{12} \end{pmatrix} = \begin{bmatrix} R_{11} & R_{12} & R_{13} & R_{14} & R_{15} & R_{16} \\ R_{21} & R_{22} & R_{23} & R_{24} & R_{25} & R_{26} \\ R_{31} & R_{32} & R_{33} & R_{34} & R_{35} & R_{36} \\ R_{41} & R_{42} & R_{43} & R_{44} & R_{45} & R_{46} \\ R_{51} & R_{52} & R_{53} & R_{54} & R_{55} & R_{56} \\ R_{61} & R_{62} & R_{63} & R_{64} & R_{65} & R_{66} \end{bmatrix} \cdot \begin{pmatrix} E_1 E_1 \\ E_2 E_2 \\ E_3 E_3 \\ E_2 E_3 \\ E_1 E_3 \\ E_1 E_2 \end{pmatrix} \qquad (8)
$$

As the electric field $\underline{E}$ is only applied in the $x_3$ direction ($E_1 = E_2 = 0$), only the third column is of importance. The induced change in the $x_1$ and $x_2$ direction has to be the same again ($R_{13} = R_{23}$) and the off-axis coefficients have to vanish ($R_{43} = R_{53} = R_{63} = 0$). Consequently, the necessary condition of a quadratic electro-optic material 5 for the present invention is

$$
R_{hg} = \begin{bmatrix} \ldots & \ldots & b & \ldots & \ldots & \ldots \\ \ldots & \ldots & b & \ldots & \ldots & \ldots \\ \ldots & \ldots & \ldots & \ldots & \ldots & \ldots \\ \ldots & \ldots & 0 & \ldots & \ldots & \ldots \\ \ldots & \ldots & 0 & \ldots & \ldots & \ldots \\ \ldots & \ldots & 0 & \ldots & \ldots & \ldots \end{bmatrix} . \qquad (9)
$$

b is a value characteristic for the respective electro-optic material 5; the two values denoted by "b" in Eq. (9) must be identical.

### (iii) Requirement for the spectral bandwidth

The refractive-index change for the present application should be broadband allowing operation over the transparency range of the active material. Absorptive effects or band-edge effects like the Stark effect in semiconductors are not of interest for an application with wide spectral bandwidth.
Materials fulfilling these requirements are for instance:

- Electro-optic liquids (or polymers and glasses with low glass transition temperature): molecules with large polarizability anisotropy and dipole moment, which are a liquid by themselves or which can be diluted in a common solvent. For these liquids as e.g. nitrobenzene, the electro-optic effect is due to the re-orientation of the molecule in the electric field. The electro-optic coefficient $r_{33}$ parallel to the electric field is by about a factor of 2 larger than the electro-optic coefficient $r_{13}$ perpendicular to it and is quadratic in the applied electric field ($r \sim E^2$).
- Electro-optic polymers: molecules with large hyperpolarizability and dipole moment are doped into or attached to a host polymer and poled along one axis to orient and fix the molecules in this direction ($x_3$ axis). The electro-optic coefficient along the poling direction $r_{33}$ is by a factor of 3 larger than the electro-optic coefficient $r_{13}$ perpendicular to it and is linear in the electric field ($r \sim E$).
- Semiconductors or dielectric: crystals with tetragonal pointgroup (4 and 4mm), trigonal (3 and 3m), and hexagonal (6 and 6mm) lattices can have a homogeneous electro-optic response in the $x_1, x_2$ plane to an applied electric field E along the $x_3$ axis. Furthermore, these crystals are not birefringent for light propagating along the z axis. Examples of 3m point group are BBO ($BaB_2O_4$) and $LiNbO_3$.

<u>List of reference signs</u>

1        Modulator

21, 22    Substrates

31, 32    Electrodes

41, 42    Mirrors

5         Active electro-optic material

91    Incident light beam

92    Exiting light beam

a, b      Material constants

E         Electric field

n         Refractive indexS

OP        Operating point

R         Quadratic electro-optic coefficients

r         Linear electro-optic coefficients

T         Transmission

t         time

V         Voltage

$x_1, x_2, x_3$    Cartesian coordinates

λ    Wavelength of light

φ    Phase


**Claims**

1. An electro-optic device (1) for influencing the amplitude and/or the phase of light (91) propagating essentially in a propagation direction $(x_3)$, comprising:

   an optical cavity containing an electro-optic material (5), and
   at least two electrodes (31, 32) for applying an electric field (E) oriented in said propagation direction $(x_3)$ across said electro-optic material (5),

   **characterized in that**
   in a Cartesian coordinate system $(x_1, x_2, x_3)$ in which the $x_3$ axis is parallel to said propagation direction $(x_3)$, the electro-optic coefficients of said electro-optic material (5) fulfil the condition

$$r_{hk} = \begin{bmatrix} \dots & \dots & a \\ \dots & \dots & a \\ \dots & \dots & \dots \\ \dots & \dots & 0 \\ \dots & \dots & 0 \\ \dots & \dots & 0 \end{bmatrix}$$

for a linear electro-optic material, and, in case that a = 0, the additional condition

$$R_{hg} = \begin{bmatrix} \dots & \dots & b & \dots & \dots & \dots \\ \dots & \dots & b & \dots & \dots & \dots \\ \dots & \dots & \dots & \dots & \dots & \dots \\ \dots & \dots & 0 & \dots & \dots & \dots \\ \dots & \dots & 0 & \dots & \dots & \dots \\ \dots & \dots & 0 & \dots & \dots & \dots \end{bmatrix} ,$$

for a quadratic electro-optic material,
wherein the symbol "..." stands for an arbitrary value.

2. The electro-optic device (1) according to claim 1, wherein said electro-optic material (5) is an electro-optic liquid, a polymer or a glass with a low glass transition temperature, for which the electro-optic effect is due to a re-orientation of molecules or a molecular group in said electric field (5).

3. The electro-optic device (1) according to claim 1, wherein said electro-optic material (5) is an electro-optic polymer comprising molecules with large hyperpolarizability and dipole moment doped into and/or attached to a host polymer and poled along the $x_3$ axis.

4. The electro-optic device (1) according to claim 1, wherein said electro-optic material (5) is a semiconductor or dielectric crystal with a tetragonal lattice and pointgroup 4 or 4mm, a trigonal lattice and pointgroup 3 or 3m, or a hexagonal lattice and pointgroup 6 and 6mm, with the rotation axis parallel to said propagation direction ($x_3$).

5. The electro-optic device (1) according to any of the preceding claims, wherein said optical cavity is defined by at least two reflecting elements (41, 42), each of said at least two reflecting elements (41, 42) preferably being realized as a metallic layer or a stack of dielectric layers on a substrate (21, 22).

6. The electro-optic device (1) according to claim 5, wherein said optical cavity is a Fabry-Perot cavity, a focal cavity or a confocal cavity.

7. The electro-optic device (1) according to claim 5 or 6, wherein at least one reflecting element (41, 42) is realized as a metallic layer and is used as one of said electrodes (31, 32).

8. Use of the electro-optic device (1) according to any of the preceding claims as an amplitude modulator, a phase modulator or tunable spectral filter.

9. A one- or two-dimensional array of electro-optic devices (1) for influencing the amplitude and/or the phase of light (91) in a spatially resolved way,
   **characterized in that**
   said electro-optic devices (1) are electro-optic devices according to any of the claims 1-7.

**10.** A method for electro-optically influencing the amplitude and/or the phase of light (91) propagating essentially in a propagation direction ($x_3$), comprising the steps of:

impinging said light (91) onto an optical cavity containing an electro-optic material (5), and
applying an electric field (E) oriented in said propagation direction ($x_3$) across said electro-optic material (5),

**characterized in that**
said electro-optic material (5) is chosen such that in a Cartesian coordinate system ($x_1$, $x_2$, $x_3$) in which the $x_3$ axis is parallel to said propagation direction ($x_3$), its electro-optic coefficients fulfil the condition

$$r_{hk} = \begin{bmatrix} \dots & \dots & a \\ \dots & \dots & a \\ \dots & \dots & \dots \\ \dots & \dots & 0 \\ \dots & \dots & 0 \\ \dots & \dots & 0 \end{bmatrix}$$

for a linear electro-optic material, and, in case that a = 0, the additional condition

$$R_{hg} = \begin{bmatrix} \dots & \dots & b & \dots & \dots & \dots \\ \dots & \dots & b & \dots & \dots & \dots \\ \dots & \dots & \dots & \dots & \dots & \dots \\ \dots & \dots & 0 & \dots & \dots & \dots \\ \dots & \dots & 0 & \dots & \dots & \dots \\ \dots & \dots & 0 & \dots & \dots & \dots \end{bmatrix}, \; b \neq 0,$$

for a quadratic electro-optic material,
wherein the symbol "..." stands for an arbitrary value.

**11.** The method according to claim 10, wherein an electric field $E(t) = E_{offset} + E_{mod}(t)$ is applied, wherein $E_{offset}$ is a time-independent component chosen such as to determine an operating point (OP) on the transmission curve $T(\lambda)$ of said optical cavity, and $E_{mod}(t)$ is a time-dependent component for modulating the amplitude and/or the phase of the transmitted light (92).

**12.** The method according to claim 11, wherein said operating point (OP) is chosen to be a point with maximum slope on the transmission curve $T(\lambda)$ of said optical cavity, thus yielding an amplitude modulation of the transmitted light (92).

**13.** The method according to claim 11, wherein said operating point (OP) is chosen to be a point with minimum slope and maximum transmission on the transmission curve $T(\lambda)$ of said optical cavity, thus yielding a phase modulation of the transmitted light (92).

31  5  32
21  41  42  22

1

λ

91

E

92

x₁, x₂

x₃

V

Fig. 1

T

λ

Fig. 2

Fig. 3

Fig. 4

Fig. 5

Fig. 6(a)

Fig. 6(b)

$x_1$

$x_2$

$x_3$

E

Fig. 7

**EP 1 536 273 A1**

## DOCUMENTS CONSIDERED TO BE RELEVANT

| Category | Citation of document with indication, where appropriate, of relevant passages | Relevant to claim | CLASSIFICATION OF THE APPLICATION (Int.Cl.7) |
|---|---|---|---|
| X | WANG C W ET AL: "DESIGN AND MODELING OF ASYMMETRIC FABRY-PEROT ELECTROOPTIC MODULATORS CONTAINING A POLYMERIC FILM" IEEE JOURNAL OF QUANTUM ELECTRONICS, IEEE INC. NEW YORK, US, vol. 30, no. 3, 1 March 1994 (1994-03-01), pages 724-731, XP000450557 ISSN: 0018-9197 * chapter III, section A, pages 726 - 727 --- | 1-3,5-10 | G02F1/21 G02F1/061 |
| A | US 4 198 115 A (KAMINOW IVAN P) 15 April 1980 (1980-04-15) * column 1, line 55 - column 2, line 52; figures 1-6 * --- | 4 | |
| A | ELDERING C A ET AL: "ELECTRICALLY INDUCED TRANSMISSIVITY MODULATION IN POLYMERIC THIN FILM FABRY-PEROT ETALONS" APPLIED OPTICS, OPTICAL SOCIETY OF AMERICA,WASHINGTON, US, vol. 28, no. 20, 15 October 1989 (1989-10-15), pages 4442-4445, XP000071291 ISSN: 0003-6935 * the whole document * ----- | 1-3 | TECHNICAL FIELDS SEARCHED (Int.Cl.7) G02F |

The present search report has been drawn up for all claims

| Place of search | Date of completion of the search | Examiner |
|---|---|---|
| THE HAGUE | 26 April 2004 | Gill, R |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

 

& : member of the same patent family, corresponding document

EPO FORM 1503 03.82 (P04C01)

**ANNEX TO THE EUROPEAN SEARCH REPORT
ON EUROPEAN PATENT APPLICATION NO.**

EP 03 40 5840

This annex lists the patent family members relating to the patent documents cited in the above-mentioned European search report.
The members are as contained in the European Patent Office EDP file on
The European Patent Office is in no way liable for these particulars which are merely given for the purpose of information.

26-04-2004

| Patent document cited in search report | Publication date | Patent family member(s) | Publication date |
|---|---|---|---|
| US 4198115 A | 15-04-1980 | NONE | |

EPO FORM P0459

For more details about this annex : see Official Journal of the European Patent Office, No. 12/82